# EUROPEAN PATENT APPLICATION

(11) **EP 1 510 387 A2**
(43) Date of publication of application: **02.03.2005**
(21) Application number: 04019656.0
(22) Date of filing: 19.08.2004
(51) Int. Cl.: B60J 7/00

(54) **Sunroof apparatus with solar cells**

(30) Priority: 26.08.2003 JP 2003301742
(71) Applicant: Aisin Seiki Kabushiki Kaisha, Kariya-shi, Aichi-ken 448-8650 (JP)
(72) Inventor: Sasaki, Toshiyuki, Kariya Aichi, 448-8605 (JP); Hayashi, Kenichiroh c/o Aisin Seiki K.K., Kariya-shi Aichi-ken, 448-8650 (JP); Yabuoshi, Masahito, Toyota-shi, Aichi-ken, 471-8571 (JP)
(74) Representative: Balsters, Robert

(57) **Abstract**

A sunroof apparatus (10,30) includes a sunroof panel (12) mounted on an first opening of a roof, a sun shade (14) provided at an inner room side of the sunroof panel, a solar cell (15,31) provided to the sunroof panel and attached at one surface which is facing the sun shade for converting light energy incident from the one side surface side and the other side surface side of the sunroof panel into electric energy and a reflecting member (25) provided on the sun shade and attached at one surface which is facing the sunroof panel.

## Description

### FIELD OF THE INVENTION

This invention generally relates to a sunroof apparatus. More particularly, the present invention pertains to a sunroof apparatus including a solar cell.

### BACKGROUND

A sunroof apparatus for a vehicle including a solar cell is described in JP1986-132407A2. The sunroof apparatus has a solar cell and a ventilating fan for ventilation on a sun shade facing a sunroof glass panel.

A sun shade is generally made lightweight for easy manual operation. Therefore, rigidity of the sun shade is generally low. If the solar cell is attached to the sun shade of low rigidity, performance of the solar cell will be worsened by deforming of the sun shade. If the sun shade is made heavyweight in order to avoid deforming of the sun shade, an easiness of the manual operation of the sun shade will be lowered.

The sunroof apparatus has a space between the sunroof glass panel and the sun shade. The space causes partial blocking of light by a portion around the roof to which the sunroof glass panel is attached. The space also causes scattering of light transmitted through the sunroof glass panel. Then, the amount of the incident light to the solar cell is reduced, therefore an efficiency of electric generation by the solar cell is reduced.

To improve the efficiency of the electric generation, a transmittance of the sunroof glass panel should be increased. However, the increase in the transmittance of the sunroof glass panel causes a decrease of a light blocking function of the sunroof glass panel. Therefore, when introducing the light from outside of the vehicle room with opening the sun shade, the light is directly introduced into the vehicle room, and a temperature in the vehicle room is raised. Thus, an atmosphere in the vehicle room becomes worse.

A need thus exists for a sunroof apparatus, which improves an efficiency of a solar cell without worsening an atmosphere in the room.

### SUMMARY OF THE INVENTION

According to an aspect of the invention, A sunroof apparatus comprises a sunroof panel mounted on an first opening of a roof, a sun shade provided at an inner room side of the sunroof panel, a solar cell provided to the sunroof panel and attached at one surface which is facing the sun shade for converting light energy incident from the one side surface side and the other side surface side of the sunroof panel into electric energy and a reflecting member provided on the sun shade and attached at one surface which is facing the sunroof panel.

According to the present invention, the energy of the light transmitted through the sunroof panel to incident to the other side of the solar cell is converted to the electric energy by the solar cell. The light reflected by the reflecting member after transmitted the solar cell which transmits light to incident the one side of the solar cell is converted to the electric energy by the solar cell. The efficiency of the solar cell for generating electricity is improved. When the sun shade is opened for introducing light into the room, the light from the outside is introduced through the solar cell. The worsening of the atmosphere in the room caused by the temperature rising is prevented because of the light from outside is partially blocked by the solar cell.

According to the present invention of claim 3, the solar cell is structured to transmit light by providing a plurality of holes easily structured at the solar cell.

According to the present invention of claim 6, providing the structure for transmitting light at the solar cell is not required because the solar cell itself is structured to transmit light.

### BRIEF DESCRIPTION OF THE DRAWINGS

The foregoing and additional features and characteristics of the present invention will become more apparent from the following detailed description considered with reference to the accompanying drawings, wherein:
Fig. 1 shows a plain view of a sunroof apparatus according to a first and a second embodiments of a present invention.
Fig. 2 shows a cross-sectional view taken on line II-II of Fig. 1 according to the first embodiment of the present invention.
Fig. 3 shows a partial cross-sectional view showing expansion of Fig. 2.
Fig. 4 shows a partial cross-sectional view showing expansion corresponding to Fig. 3 according to the second embodiment of the present invention.

### DETAILED DESCRIPTION

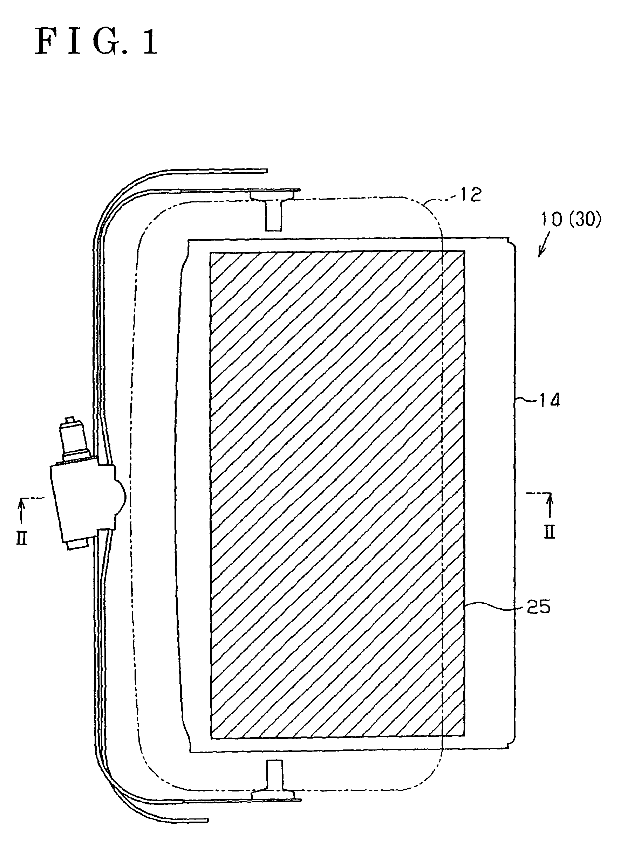

A first embodiment of the present invention will be explained with reference to Fig. 1-3 as follows. In the first embodiment, as shown in Fig. 1-2, a sunroof apparatus 10 for a vehicle includes a sunroof glass panel 12 provided at a first opening 11a structured at the vehicle roof 11 and a sun shade 14 provided at a second opening 13a structured at a ceiling provided at the inner room side of the vehicle. The second opening 13a is opposed to the first opening 11a.

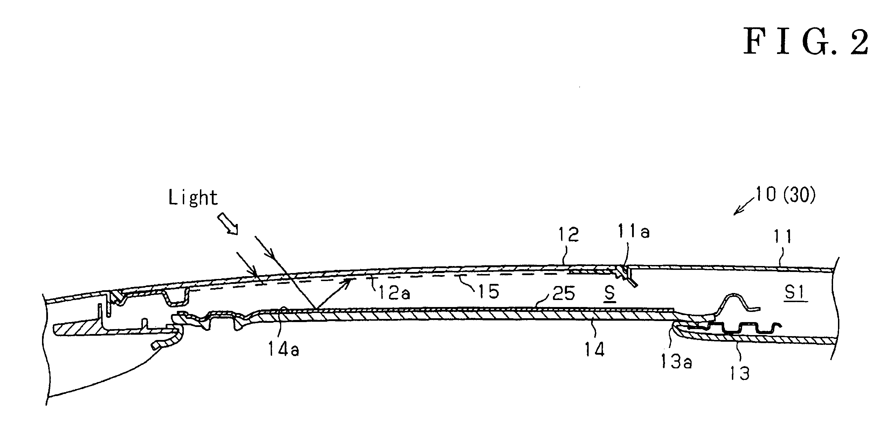

The sun roof glass panel 12 mainly made from a transparent glass material is slidably attached at the vehicle roof 11 in back and forth direction (side to side direction in Fig. 1-2) of the vehicle for opening and closing the first opening 11a. The sun shade 14 is slidably attached at the vehicle roof 11 in back and forth direction of the vehicle for opening and closing the second opening 13a of the ceiling. When the sunroof panel 12 and the sun shade 14 close the first opening 11a and the second opening 13a respectively, the sunroof glass panel 12 and the sun shade 14 form an space S therebetween. An accommodating space S1 is formed at one side of the first opening 11a and the second opening 13a (right side of Fig. 2) between the roof 11 and the ceiling for accommodating the sun shade 14 when the sun shade 14 is opened.

The solar cell 15 which transmits light into the vehicle room partially is adhesively bonded at substantially entire surface of the one side surface 12a facing inside of the vehicle room (facing the sun shade 14) of the sunroof glass panel 12. The solar cell 15 is structured for converting light energy incident from either outside or inside of the vehicle room into electric energy.

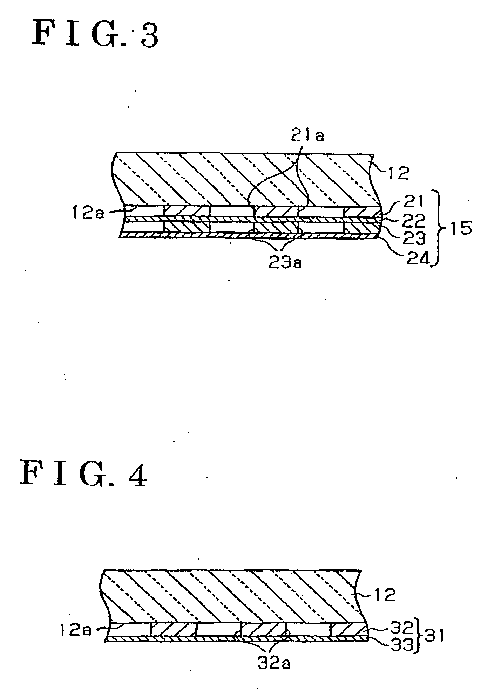

Detailed structure of the solar cell 15 will be explained with reference to Fig. 3 (expansion of Fig. 2). The solar cell 15 includes a first solar cell portion 21, a first protective sheet 22, a second solar cell portion 23 and a second protective sheet 24 sequentially layered on the sunroof glass panel 12. The solar cell portion 21 formed from an amorphous silicon material, or the like, converts the light energy incident from outside of the vehicle into the electric energy. The solar cell portion 21 of the solar cell 15 is adhesively bonded to the sunroof glass panel 12. The first protective sheet 22 made from a transparent insulating material is provided between the first solar cell portion 21 and the second solar cell portion 23 for insulating therebetween. The second solar cell portion 23 structured from an amorphous silicon material, or the like, converts the light energy incident from inside of the vehicle into the electric energy. The second protective sheet 24 made from a transparent insulating material is adhesively bonded to the second solar cell portion 23 for protecting the solar cell 15 from external influences.

A plurality of through holes 21a penetrating the first solar cell portion 21 in direction of thickness (vertical direction in Fig. 3) for introducing light into the room is formed at the first solar cell portion 21. The plurality of through holes 23a penetrating the second solar cell portion 23 in direction of thickness for introducing light into the room is formed at the second solar cell portion 23. The matrix of through holes 21a, 23a having same shapes and sizes are provided at the same positions each other. The incident light transmitted from the outside of the vehicle through the sunroof glass panel 12 passes through the solar cell 15 via the through holes 21a, 23a to be introduced to the inside of the vehicle room. The solar cell 15 is drawn by a broken line in Fig. 2 for emphasizing that the solar cell 15 transmits light into the vehicle room.

A reflecting member 25 is adhesively bonded to substantially entire surface of the side surface 14a facing the outside of the vehicle (facing the sunroof glass panel 12) of the sun shade 14. The reflecting member 25 is made from an aluminum foil, or the like. The light incident from the outside of the vehicle and partially transmitted through the sunroof glass panel 12 and the solar cell 15 is reflected by the reflecting member 25 to incident to the solar cell 15 (the second solar cell portion 23) from the inside direction of the vehicle room when the sunroof glass panel 12 and the sun shade 14 close the opening portion 11a and the inner opening portion 13a respectively (a condition shown in Fig. 2). The second solar cell portion 23 converts light energy of the reflected light from the reflecting member 25 into the electric energy.

The solar cell 15 converts the light energy of the light incident only from the outside of the vehicle into the electric energy when the sun shade 14 is opened and accommodated into the accommodating space S1. The light incident from the outside of the vehicle is introduced into the room through the through holes 21a and 23a, therefore the light incident from the outside of the room is partially blocked by the solar cell 15. Thus, the worsening of atmosphere in the room caused by such as temperature rising is restrained.

In the second embodiment, a sunroof apparatus 30 includes a monolayered solar cell 31 instead of the bilayered solar cell 15 in the first embodiment. Components except the solar cell 31 are same as the components of the first embodiment. Functions and movements of the components are also same as that of the first embodiment. Differences from the first embodiment will be explained mainly.

In the first embodiment, the solar cell 15 is bilayer of the first and the second solar cell portion 21, 23 in pair for converting the light energy incident from the outside of the vehicle and the light energy incident from the inside of the vehicle (reflected from the reflecting member 25) into the electric energy. On the other hand, in the second embodiment, the monolayered solar cell 31 is used as shown in Fig. 4. The solar cell 31 including a solar cell portion 32 formed from an amorphous silicon material, or the like, for converting the light energy incident from the outside and the inside of the vehicle into the electric energy is adhesively bonded to the sunroof glass panel 12. The solar cell 31 includes a protective sheet 33 made from a transparent insulating material for protecting the solar cell 31 from external influences. The protective sheet 33 is adhesively bonded to the solar cell portion 32. The matrix of the plurality of through holes 32a for introducing light into the vehicle room is provided at the solar cell portion 32. Forming monolayered solar cell 31 enables to reduce the thickness (vertical direction in Fig. 4) of the solar cell 31.

In the first embodiment, the first and the second solar cell portions 21, 23 of the solar cell 15 are structured from an amorphous silicon material. In the second embodiment, the solar cell portion 32 of the solar cell 31 is also structured from an amorphous silicon material. The first and the second solar cell portions 21, 23 and the solar cell portion 32 of the solar cell 31 may be structured from a monocrystal of silicon material, a polycrystal of silicon material, a compound semiconductor material including III-V series, II-VI series compounds, and a dye-sensitized solar cell sensitized by a metallic complex or an organic dye using an oxidized semiconductor thin film electrode, or the like. In a case the dye-sentisized solar cell is used for the solar cell portions 21, 23 of the solar cell 15 or the solar cell portion 32 of the solar cell 31, the solar cell itself is structured by a material which transmits light into the vehicle room. Therefore, the structure for introducing light (the through holes 21a, 23a) may not be required.

In the first and second embodiments, the slidable sunroof glass panel 12 is employed for opening and closing the opening 11a of the roof 11. However, a sunroof glass panel fixed at the opening 11a, and a sunroof glass panel which can be tilted up may be employed.

Not particularly mentioned in the embodiments, the electric energy can be used for power source of an air conditioning, a fan for ventilation, or the like. The electric energy can also be used for power source for charging a battery.

As described above in detail, according to the embodiments and possible changes thereof, following effects are obtained. The incident light energy transmitted through the sunroof glass panel 12 from the outside of the vehicle is converted into the electric energy by the first solar cell portion 21 (the solar cell portion 32) of the solar cell 15 (the solar cell 31). The incident light transmitted through the solar cell 15 (the solar cell 31) which partially transmits light into the vehicle room from outside of the vehicle is reflected by the reflecting member 25 to be the incident light from the inside direction of the vehicle room to incident to the second solar cell portion 23 (the solar cell portion 32). The second solar cell portion 23 of the solar cell 15 (the solar cell portion 32 of the solar cell 31) converts the light energy of the incident light into the electric energy. Therefore, the efficiency of the solar cell 15 (the solar cell 31) may be improved. When the sun shade 14 is opened, the incident light is introduced into the room via the solar cell 15 (the solar cell 31). Therefore, the incident light is partially blocked by the solar cell 15 (the solar cell 31). Thus, the worsening of the atmosphere in the vehicle caused by such as temperature rising is restrained.

As described above, the solar cell 15 (the solar cell 31) which partially transmits light may be structured extremely simple by forming the plurality of through holes 21a, 23a (the through holes 32a). A balance between the efficiency of electricity generating and the amount of the light introduced into the room of the solar cell 15 (the solar cell 31) may be freely set by selecting shape, adjusting size, quantity, or the like, of the through holes when designing the solar cell 15 (the solar cell 31).

As described above, the first and second solar cell portions 21, 23 having same shapes are layered to form the solar cell 15 simply.

As described above, the temperature in the room is maintained to be comfortable by the reflecting member 25 adhesively bonded to the sun shade 14 for reflecting heat rays from the sun.

## Claims

1. A sunroof apparatus (10, 30) comprising:
a sunroof panel (12) adapted to be providing at an first opening of a roof; and
a sun shade (14) provided at an inner room side of the sunroof panel
**characterized in that**
a solar cell (15, 31) attached at one surface of the sunroof panel, the one surface facing the sun shade, for converting light energy incident from the one side surface side and the other side surface side of the sunroof panel into electric energy; and
a reflecting member (25) attached at one side surface of the sun shade, the one side surface facing the sunroof panel.

2. The sunroof apparatus according to Claim 1, wherein
the sun shade adapted to be slidably providing at a second opening of a ceiling so as to be opening and closing the second opening of the ceiling.

3. The sunroof apparatus according to any one of Claims 1 and 2, wherein
the solar cell is structured to transmit light into the room via a plurality of through holes (21a, 23a, 32a) provided at the solar cell.

4. The sunroof apparatus according to Claims 3, wherein
the solar cell includes a solar cell portion (21, 23) at which the plurality of through holes are provided and a protective sheet (22, 24, 33) for protecting the solar cell portion.

5. The sunroof apparatus according to Claims 4, wherein
the solar cell portion and the protective sheet are layered sequentially in thickness direction.

6. The sunroof apparatus according to any one of Claims 1 and 2 wherein
the solar cell is made by material which transmits light into the room.

7. The sunroof apparatus according to any one of Claims 1, 2 and 6 wherein
the solar cell is dye-sensitized solar cell.
